# EUROPEAN PATENT APPLICATION

(11) **EP 0 716 322 A1**
(43) Date of publication of application: **12.06.1996**
(21) Application number: 95308731.9
(22) Date of filing: 04.12.1995
(51) Int. Cl.: G02B 6/36, G02B 6/38

(54) **Optical fiber holder**

(30) Priority: 05.12.1994 JP 329979/94
(71) Applicant: Asahi Kohden Co., Ltd., Yokohama-shi, Kanagawa-ken 226 (JP)
(72) Inventor: Tanaka, Toshiyasu, Yokohama-shi, Kanagawa-ken 226 (JP)
(74) Representative: Hague, Alison Jane

(57) **Abstract**

An optical fibre holder comprising a pair of hollow members (21;54) opposingly provided so as to interpose an optical fibre between them, and a holding case (20) that holds the hollow members (21;54) in such a state that their peripheries (23) are pressed against its inner wall. The hollow members (21;54) are in the shape substantially of cylinders of semi-circular cross-section, and are provided in such a manner that the planar portions (22;54b) thereof face each other so that the optical fibre is held between the hollow members (21;54) at the centre of each planar portion (22;54b) thereof. An optical fibre can be elastically fixed without causing a damage to the optical fibre main body and can be firmly fixed because of the large contact areas assured in the axial direction and in the peripheral direction.

## Description

This invention relates to an optical fibre holder for use in optical connectors or the like which join individual optical fibres.

To join the individual optical fibres, a method has been hitherto employed in which an end of an optical fibre is brought into holding engagement with a holder called a ferrule and the holder having the optical fibre is fitted to a connector or the like so that ends of optical fibres to be joined are precisely butted against each other and fixed. In such an instance, the optical fibre is required to be securely held so as not to be damaged and also not to come off, because even minor defects produced when the optical fibre is brought into holding engagement with the holder may cause a break.

As methods for bringing ends of optical fibres into holding engagement with holders, it has been proposed to use (1) a method in which the optical fibre is inserted into a cylindrical sleeve and fixed with an adhesive, (2) a method as disclosed in Japanese Patent Publication No. 5-48446, in which the optical fibre is inserted into a metal pipe or the like and is secured by mechanically clamping the metal pipe, (3) notches are made in a metal pipe at one end in the axial direction to a certain extent, and the notched end is branched off (or made divergent or fishtail) to form an elastic tail portion, wherein the optical fibre is inserted into the metal pipe thus formed and thereafter the elastic tail portion is pressed to elastically clamp and fix the optical fibre, and (4) a method as disclosed in Japanese Patent Application Laid-open No. 63-18306, in which a plurality of metal tube members having circular cross sections are longitudinally provided around the optical fibre, and the optical fibre is fixed by holding these tube members in a compressed state by means of a holding member provided around the tube members.

However, in the case where the optical fibre is fixed with an adhesive as in the above method (1), it takes time to pretreat the optical fibre and dry the adhesive, bringing about not only a poor productivity but also a possibility that the position of the optical fibre may move before the adhesive solidifies.

In the method where the metal pipe is directly clamped as in the above method (2), the optical fibre may be damaged, e.g., broken, if it is clamped with even a little too much pressure, and on the other hand the optical fibre may come off if it is clamped at a too weak a pressure, causing the problem that the force of clamping must be strictly controlled.

In the method where the elastic tail portion formed in the metal pipe is utilized as in the above method (3), the area at which the optical fibre is elastically held is very small causing the problem that the materials for the holding portion and the precision of manufacture must be strictly controlled.

In the method where the tube members having circular cross sections are used as in the above method (4), the tube members are only in linear contact with the optical fibre, and hence no sufficient force of fixing can be obtained, causing the optical fibre to come off in some cases.

Accordingly, an object of the present invention in at least preferred embodiments is to provide an inexpensive optical fibre holder that may cause no damage to optical fibres, can surely fix them and also can be assembled with ease.

Viewed from one aspect the present invention provides an optical fibre holder comprising a pair of hollow members adapted to be arranged opposingly in use so as to interpose an optical fibre between them, and a holding case for holding the hollow members in such a state that their peripheries are pressed against its inner wall; said hollow members being in the shape substantially of cylinders of semi-circular cross-section, and being adapted to be arranged in use in such a manner that the planar portions thereof face each other so that a said optical fibre is held between said hollow members at the centre (widthwise) of each planar portion thereof.

In a preferred embodiment of the present invention, the hollow members are in the shape substantially of cylinders of semi-circular cross-section and also a holding groove into which the optical fibre is to be fitted in the axial direction is formed at the centre of each planar portion of the hollow members.

In a preferred embodiment of the present invention, one-end portion of the holding groove is made to have a larger inner groove diameter to form a fibre lead-in portion and the other-end portion of the holding groove is made to have a smaller inner groove diameter to form a fibre fixing portion.

In a preferred embodiment of the present invention, the hollow members are each provided with a step portion or terrace at the middle of each planar portion thereof, and the planar portion around the optical fibre fixing portion of the holding groove lies a plane receded toward the curved peripheral surface of the hollow member with respect to the planar portion around the optical fibre lead-in portion of the holding groove.

In another preferred embodiment of the present invention, the holding case comprises:
an optical fibre guide formed of a cylindrical member having at the centre thereof an insertion hole through which the optical fibre is fittingly inserted in use and having such a shape that a rear-end portion thereof is smaller in diameter than a front-end portion thereof; and
a sleeve one-end portion of which has such an inner diameter that said pair of hollow members can be inserted therein and the rear end of said optical fibre guide can be press-inserted therein, and the other-end portion of which has such an inner diameter that the peripheries of said pair of hollow members can be pressed against its inner wall when the hollow members are forced thereinto with the rear end portion of said optical fibre guide.

The optical fibre holder of present invention is basically constituted of a pair of hollow members opposingly provided so as to interpose an optical fibre between them, and a holding case that holds the hollow members in such a state that their peripheries are pressed against its inner wall. The hollow members are in the shape substantially of cylinders of semi-circular cross-section, and are provided in such a manner that the planar portions thereof face each other so that the optical fibre is held between the hollow members at the centre (widthwise) of each planar portion thereof.

According to at least preferred embodiments of optical fibre holders in accordance with the present invention, a pair of semi-cylindrical hollow members are put together face-to-face with their planar portions facing inwardly, and an optical fibre is inserted along the centre of the planar portions of the hollow members so that the peripheries of the hollow members are pressed against the inner wall of the holding case, whereby the hollow members undergo compression deformation to tighten and fix the optical fibre. Since in this way the optical fibre is elastically tightened and fixed by tightening it via such a pair of hollow members, the optical fibre can hardly be damaged or broken and the force of pressing need not be so strictly controlled, bringing about an improvement in productivity.

In the conventional method in which the metal pipe is clamped or the elastic tail portion formed in the metal pipe is utilized to press-hold the optical fibre, the contact area between the optical fibre and the metal pipe at the portion where the latter presses the former is so small that the pressure converges to tend to damage the optical fibre, and yet, an optical fibre pressed at a weak force tends to come off. However, in at least preferred embodiments of the present invention, since the optical fibre comes into contact with the hollow members over a large area in the axial direction and in the peripheral direction, the pressure is diverged to hardly cause any damage to the optical fibre and also a force of fixing can be strong enough to prevent the optical fibre from coming off.

In the method disclosed in Japanese Patent Application Laid-open No. 63-18306, the optical fibre only comes into linear contact with the tube members, and hence no sufficient force of fixing can be obtained. In at least preferred embodiments of the present invention, however, the optical fibre is pressed between the planar portions of the semi-cylindrical hollow members, whereupon the above planar portions curve to come into face contact with the periphery of the optical fibre, so that a stronger force of fixing can be obtained. Also, a holding groove to which the optical fibre is to be fitted in the axial direction may be formed at the centre of each planar portion of the hollow members. This can make much larger the contact area between the hollow members and the optical fibre, so that the above effect can be made higher.

Meanwhile, in a preferred embodiment of the present invention, one-end portion of the holding groove of the hollow member is made to have a larger inner groove diameter to form a fibre lead-in portion and the other-end portion of the holding groove is made to have a smaller inner groove diameter to form a fibre fixing portion. In such an instance, the optical fibre can be inserted into the gap between the hollow members with ease by inserting the optical fibre thereto on the side of the fibre lead-in portion. The groove inner diameter of the holding groove at its fixing portion may be made small enough for the jacket of the optical fibre not to enter, whereby the jacket portion can be prevented from entering into the fixing portion. Moreover, since the groove inner diameter of the holding groove is made larger at the end on the side of the lead-in portion, the hollow regions of the hollow members are compressed more during manufacture to have a crushed shape at that end, so that the optical fibre can be prevented from being wrongly inserted into the hollow regions.

Embodiments of the invention will now be described, by way of example only, with reference to the accompanying drawings, wherein:

Fig. 1 is a cross section to illustrate an embodiment of the optical fibre holder according to the present invention, in a condition before the optical fibre is tightened.

Fig. 2 is a cross section to illustrate the Fig. 1 optical fibre holder in which the optical fibre has been tightened.

Fig. 3 is a side elevation to illustrate an example of the hollow member used in the optical fibre holder of the present invention.

Fig. 4 is a plan view of the hollow member shown in Fig. 3.

Fig. 5 is a right-end elevation of the hollow member shown in Fig. 3.

Fig. 6 is a left-end elevation of the hollow member shown in Fig. 3.

Fig. 7 is a cross section of the hollow member along the line A-A in Fig. 3.

Fig. 8 is a cross section of the hollow member along the line B-B in Fig. 3.

Fig. 9 is a perspective view to illustrate another example of a hollow member used in accordance with another embodiment of the present invention.

Fig. 10 is a perspective view to illustrate how the optical fibre is held between the hollow members shown in Fig. 9.

Figs. 11(A) to 11(C) show various stages in an example of a process for producing a hollow member used in the optical fibre holder of the present invention.

Fig. 12 is a perspective view to illustrate a shape commonly taken for optical fibres.

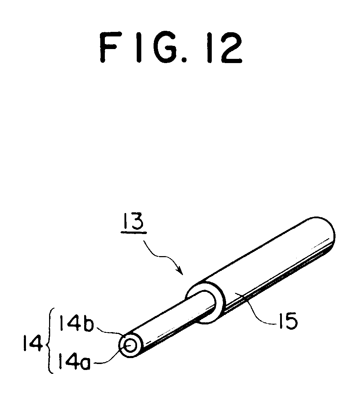

Fig. 12 illustrates a shape commonly taken for optical fibres to which the optical fibre holder of the present invention is applied. More specifically, an optical fibre 13 is constituted of a fibre main body 14 comprised of a core 14a and a clad 14b and a jacket 15 made of resin, covering the main body. When the optical fibre 13 is brought into pressure engagement with a holder, the jacket 15 must be stripped at one end of the optical fibre 13 for a certain length so that the fibre main body 14 itself can be held.

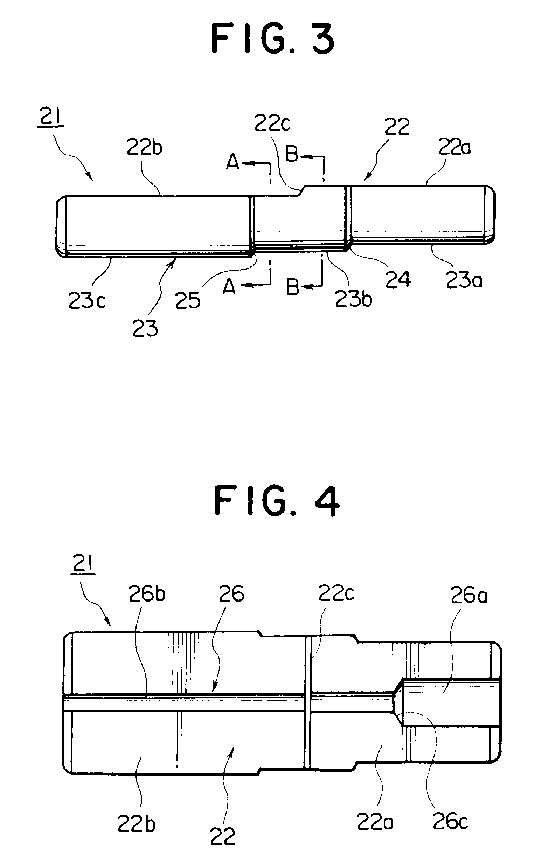

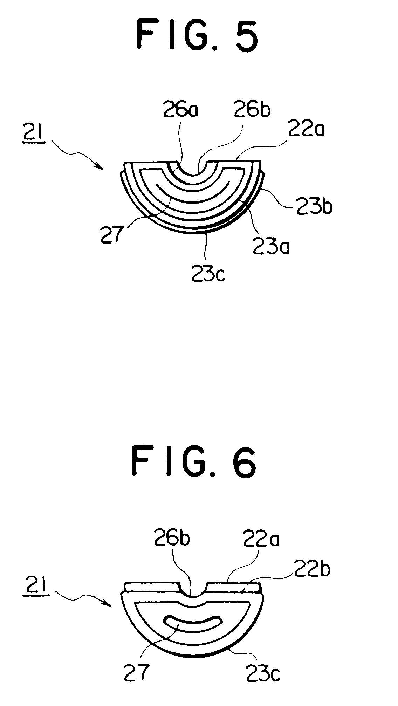

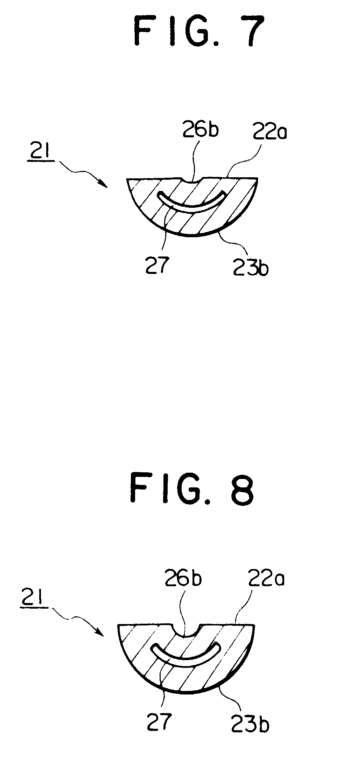

Figs. 3 to 8 illustrate an example of the hollow member used in the optical fibre holder of a first illustrated embodiment of the present invention. Fig. 3 is a side elevation, Fig. 4 a plan view, Fig. 5 a right-end elevation, Fig. 6 a left-end elevation, Fig. 7 a cross section along the line A-A in Fig. 3, and Fig. 8 a cross section along the line B-B in Fig. 3.

This hollow member 21 is preferably made of a material capable of plastic deformation, such as metal. In the present embodiment, it is obtained by press-molding a cylindrical member made of brass, and has the shape substantially of a cylinder of semi-circular cross-section. Its planar portion 22 has an inwardly raised portion 22a and an outwardly receded portion 22b, which meet at an inclined step or terrace 22c formed between them. For the purposes of this description the terms "inwardly" and "outwardly" should be understood with reference to the orientation of the hollow member within the holder in use. The curved periphery 23 of the hollow member 21 has an inwardly receded portion 23a, an intermediate portion 23b and an outwardly raised portion 23c which border on two inclined steps or terraces 24 and 25. The inwardly raised portion 22a of the planar portion 22 and the inwardly receded portion 23a of the periphery 23 are positioned in substantially corresponding positions, with the aforementioned portion 23a of the periphery 23 outside of the mentioned portion 22a of the planar portion 22. The outwardly receded portion 22b of the planar portion and the outwardly raised portion 23c of the periphery 23 are similarly substantially correspondingly positioned.

At the centre (widthwise) of the planar portion 22, an optical fibre holding groove 26 is formed in the axial direction. One-end portion of this holding groove 26 is made to have a larger groove inner diameter to form an optical fibre lead-in portion 26a. The other-end portion of the holding groove 26 is made to have a smaller inner groove diameter to form an optical fibre fixing portion 26b. The boundary between the lead-in portion 26a and the fixing portion 26b forms a tapered area 26c where the inner diameter becomes gradually smaller.

The inner diameter of the holding groove 26 is so designed that, when the pair of hollow members 21 are put together with their planar portions 22 directed inwardly facing each other, the inner diameter of the lead-in portion 26a defined by holding grooves 26 has such a size that the optical fibre can be inserted at its part covered with the jacket and the inner diameter of the fixing portion 26b defined by holding grooves 26 has such a size that the fibre main body of the optical fibre substantially fits therein.

As shown in Fig. 5, on the one-end portion of the hollow member 21 at which the lead-in portion 26a is formed, a hollow 27 has the shape of an arc in an almost crushed state because of the lead-in portion 26a having a broad and deep groove. Hence, when the optical fibre is inserted, it can be prevented from being wrongly inserted into the hollow 27.

As shown in Fig. 6, on the other-end portion of the hollow member 21 at which the fixing portion 26b is formed, the hollow 27 is not crushed and has a sufficient gap because of the fixing portion 26b formed to have a narrow and shallow groove. Hence, when the optical fibre is pressed against the fixing portion 26b, a resilience is imparted so that the groove inner diameter is not damaged.

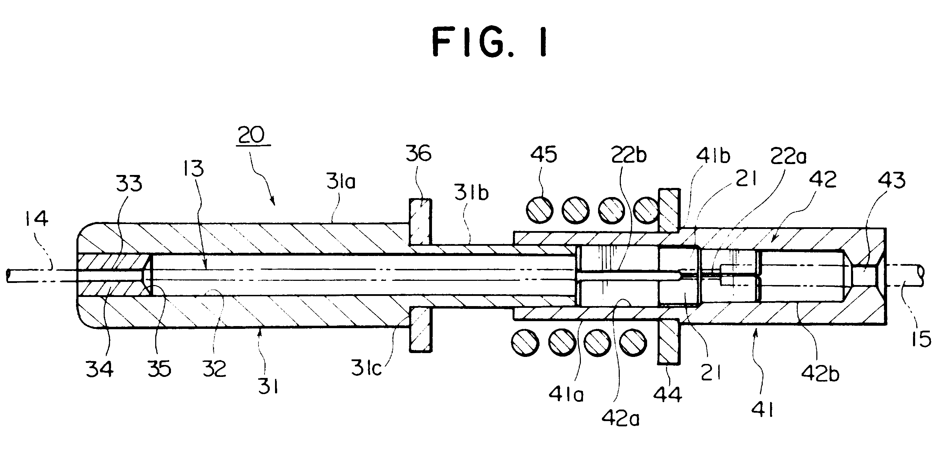

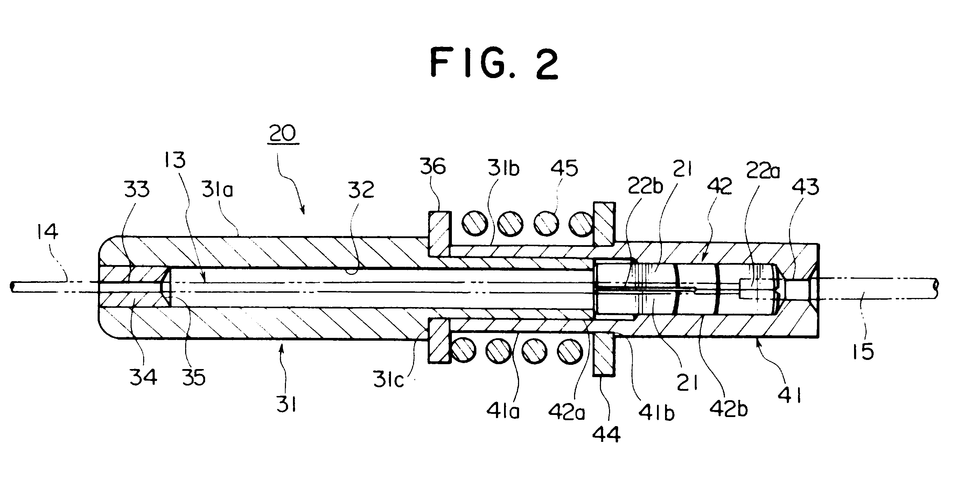

Figs. 1 and 2 illustrate an embodiment of the optical fibre holder of the present invention in which the hollow members 21 described above are fitted to a holding case. Fig. 1 illustrates the optical fibre holder in a condition before the optical fibre is tightened. Fig. 2 illustrates the optical fibre holder in which the optical fibre has been tightened.

The optical fibre holder, denoted by reference numeral 20, is constituted of an optical fibre guide 31 made of stainless steel or a ceramic such as zirconia, a sleeve 41 made of stainless steel or the like, the pair of hollow members 21 held inside the sleeve 41, and the optical fibre 13 held between these hollow members 21. The optical fibre guide 31 and the sleeve 41 constitute the holding case in the illustrated embodiment of present invention.

The optical fibre guide 31 has a substantially cylindrical shape, and is comprised of a front-end portion 31a having a large outer diameter and a rear-end portion 31b having a small outer diameter. An axial hole 32 of the optical fibre guide 31 has such a size that the optical fibre (main body) 14 can be inserted in a free state except at its forward end. At the forward end of the axial hole 32, a guide sleeve 34 made of resin is fitted, having a guide hole 33 with an inner diameter which is sized for the optical fibre (main body) 14 to fit therein. The guide hole 33 is made gradually larger in diameter to form a tapered area 35 at the rear end face of the guide sleeve 34. This facilitates easy insertion of the optical fibre main body 14.

On the periphery of the rear-end portion 31b of the optical fibre guide 31, a ring member 36 is fitted at its front end. The ring member 36 engages with a step portion 31c formed between the front-end portion 31a and the rear-end portion 31b so that it does not move toward the front-end side 31a.

The sleeve 41 has a holding hole 42 in which the hollow members 21 are inserted. This holding hole 42 communicates with a lead-in hole 43 through which the optical fibre 13 is led in, to form a through-opening that passes through the axis of the sleeve 41. The holding hole 42, at its front-end portion, allows insertion of the pair of hollow members 21 and also has an enlarged diameter portion 42a having an inner diameter large enough for the rear-end portion 31b of the optical fibre guide 31 to be pressed thereinto, and, at its rear end portion, has a reduced diameter portion 42b having an inner diameter small enough for the pair of hollow member 21 to press against the inner wall of the sleeve.

The periphery of the sleeve 41 has a reduced diameter portion 41a at its front-end, and a ring member 44 is fitted on the periphery thereof at its rear end. This ring member 44 engages with a step portion 41b so that it does not move rearward. This ring member 44 serves as a portion where the present optical fibre holder is fixed to an optical connector (not shown). Then, a coil spring 45 is fitted between the ring member 36 fitted on the periphery of the rear end portion of the optical fibre guide 31 and the ring member 44 fitted on the periphery of the sleeve 41.

The ring members 36 and 44 and the coil spring 45 are provided so that the tip of the optical fibre guide 31 may elastically come into contact with a member to be connected, when the former is brought into contact with the latter. These, however, are not necessarily essential in the present invention.

How to use this optical fibre holder 20 will be described below.

First, as shown in Fig. 1, the pair of hollow members 21 as shown in Figs. 3 to 8 are inserted, with their lead-in portion 26a end ahead, to the enlarged diameter portion 42a of the holding hole 42 of the sleeve 41 in the state that their planar portions 22 stand face-to-face. The ring member 44 and the coil spring 45 are beforehand fitted on the periphery of the reduced diameter portion 41a of the sleeve 41. In this state, the rear-end portion 31b fitted with the ring member 36 of the optical fibre guide 31 is inserted into the enlarged diameter portion 42a of the holding hole 42 of the sleeve 41.

Then, the leading end to be connected, of the optical fibre 13 is passed through the lead-in hole 43 of the sleeve 41, further passed through between the pair of hollow members 21, and still further passed through the axial hole 32 and the guide hole 33 until it projects from the front end face of the optical fibre guide 31. Here, the leading end portion of the optical fibre 13 is beforehand stripped of its jacket 15 in a predetermined length so that the fibre main body 14 is kept bare. Since the optical fibre 13 is inserted from the lead-in portion 26a of the holding grooves 26 of the hollow members 21, it can be inserted with ease. Also, the part where it is covered with the jacket 15 can be inserted to the lead-in portion 26a but can not be inserted to the fixing portion 26b. The optical fibre main body 14 is held in such a state that it fits into the holding grooves 26 of the hollow members 21.

After the optical fibre 13 has been set in this way, the rear-end portion 31b of the optical fibre guide 31 is, as shown in Fig. 2, firmly pushed into the innermost recess of the enlarged diameter portion 42a of the holding hole 42 of the sleeve 41. As a result, the pair of hollow members 21 are pushed into the reduced diameter portion 42b of the holding hole 42 with the end of the lead-in portion 26a ahead as shown in Fig. 2. Here, since the steps 24 and 25 are provided on the peripheries of the hollow members 21 and the outer diameter on the end of the lead-in portion 26a is made smaller, the hollow members 21 can be pushed into the reduced diameter portion 42b of the holding hole 42 with ease.

Moreover, since the planar portions 22b of the pair of hollow members 21 around the fixing portion 26b have such a shape that they are outwardly receded and also the peripheries 23c at that portion have such a shape that they are outwardly raised, the peripheries 23c at the part where the fixing portion 26b of the hollow members 21 is provided can be effectively pressed against the wall at the reduced diameter portion 42b of the holding hole 42. As a result, the optical fibre main body 14 is fixed under pressure in a state in which it is held between the pair of hollow members 21 at their fixing portion 26b. Since also the pressure exerted by the hollow members 21 is elastically applied on account of the hollow regions 27, the optical fibre main body 14 can be prevented from being damaged. Incidentally, after the optical fibre 13 has been fixed, the part of the optical fibre main body 14, projecting from the forward end of the optical fibre guide 31 is cut off by a conventional method and is optionally polished.

In this way, in the present optical fibre holder 20, the optical fibre 13 is elastically tightened and fixed by means of the pair of hollow members 21 having hollow regions 27, and hence the optical fibre itself may hardly be damaged and also extensive contact areas can be assured in the axial direction and in the peripheral direction, so that the optical fibre 13 can be firmly fixed.

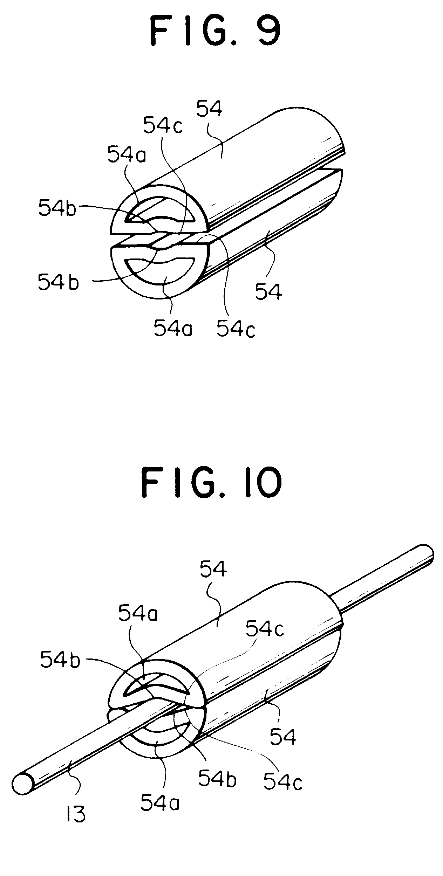

Fig. 9 illustrates another example of the hollow members used in the optical fibre holder of the present invention. Fig. 10 also illustrates how the optical fibre is held between the hollow members shown in Fig. 9.

As shown in Fig. 9, a pair of hollow members 54 are formed by crushing hollow metal pipes so as to provide semi-circular cross sections, where substantially semi-circular hollows 54a are formed in the interior and holding grooves 54b extending in the axial direction are respectively formed at the centres (widthwise) of planar portions 54c. Then, the pair of hollow members 54 are so arranged that their planar portions 54c face towards each other, and are held in the same holding case as the one shown in Figs. 1 and 2.

As shown in Fig. 10, the optical fibre 13 is brought into a state where it is held with the hollow members 54 between their planar portions 54c so that the optical fibre 13 is made to fit into the holding grooves 54b. Then the same operation as in the above embodiment may be repeated so as to press the hollow members 54 against the wall inside the holding case, whereby the optical fibre 13 can be pressure-fixed.

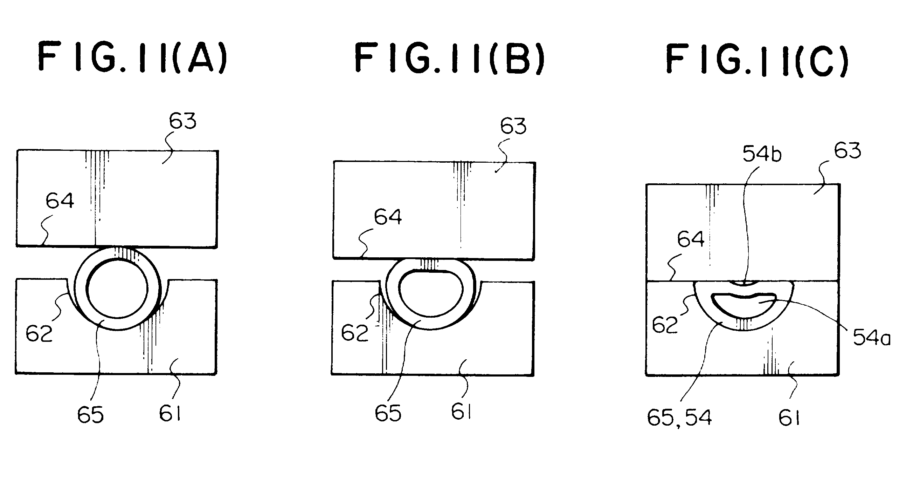

Figs. 11(A) to 11(C) illustrate an example of a process for producing the hollow member 54.

In these drawings, reference numeral 61 denotes a die, at the middle of which a groove 62 is formed in a shape of semi-circular cross section. A punch 63 is also provided opposingly to the die 61. The bottom surface 64 serving as the press surface of the punch 63 is flat. As materials used to form the hollow member 54, it is preferable to use a cylindrical pipe 65 made of a relatively soft metal as exemplified by brass. This pipe 65 may preferably have an outer diameter of from 0.5 to 5 mm, an inner diameter of from 0.1 to 4.9 mm and a length of from 1 to 20 mm. The pipe 65 may also preferably be bevelled beforehand so as to be tapered at the peripheries of both its end faces.

The hollow member can be produced in the manner as described below. First, as shown in Fig. 11(A), the pipe 65 is put on the groove 62 of the die 61. In that state, as shown in Fig. 11(B), the punch 63 is descended to press the pipe 65. Then, as shown in Fig. 11(C), the pipe 65 is pressed until the punch 63 comes into contact with the die 61, whereupon it is crushed into a shape having a semi-circular cross section in the groove 62 of the die 61 to form the hollow member 54. The hollow member 54 thus obtained has in its inside a hollow path 54a having a semi-circular cross section, and, as a surprising effect, a holding groove 54b extending in the axial direction is formed at the centre (widthwise) of its planar portion 54c.

A linear projection (not shown) may be provided at the centre of the bottom surface of the punch 63 so that the holding groove 54 can be surely formed.

As described above, according to optical fibre holders in accordance with at least preferred embodiments of the present invention, the pair of substantially half-round cylindrical hollow members are put together face-to-face with their planar portions inside, and the optical fibre is inserted between these planar portions so that the peripheries of the hollow members are pressed against the inner wall of the holding case, whereby the optical fibre is elastically tightened and fixed. Hence any damage to the optical fibre is minimised and the optical fibre can also be firmly fixed because of the large contact areas assured in the axial direction and in the peripheral direction.

Since also the elasticity produced when the hollow members are pressed against the wall is utilized to fix the optical fibre, the force of pressing and the precision of manufacture need not be so strictly controlled, bringing about an improvement in productivity.

Moreover, when an optical fibre holding groove is formed at the centre of the planar portion of each hollow member, the optical fibre can be more surely fixed.

Furthermore, in the case when one-end portion of the holding groove of the hollow member is made to have a larger inner groove diameter to form the optical fibre lead-in portion and the other-end portion thereof is made to have a smaller inner groove diameter to form the optical fibre fixing portion, the optical fibre can be easily and surely inserted into the holding grooves of the hollow members when the optical fibre is inserted in the state when the hollow members are fitted into the holding case.

## Claims

1. An optical fibre holder comprising a pair of hollow members (21;54) adapted to be arranged opposingly in use so as to interpose an optical fibre between them, and a holding case (20) for holding the hollow members (21;54) in such a state that their peripheries (23) are pressed against its inner wall; said hollow members (21;54) being in the shape substantially of cylinders of semi-circular cross-section, and being adapted to be arranged in use in such a manner that the planar portions (22;54c) thereof face each other so that a said optical fibre is held between said hollow members (21;54) at the centre of each planar portion (22;54c) thereof.

2. The optical fibre holder according to claim 1, wherein at the centre of each planar portion (22;54c) of said hollow members (21;54) there is formed a holding groove (26;54b) into which the optical fibre is to be fitted in the axial direction.

3. The optical fibre holder according to claim 2, wherein one-end portion (26a) of said holding groove (26) is made to have a larger inner groove diameter to form a fibre lead-in portion (26a) and the other-end portion (26b) of said holding groove (26) is made to have a smaller inner groove diameter to form a fibre fixing portion (26b).

4. The optical fibre holder according to claim 3, wherein said hollow members (21) are each provided with a step portion (22c) at the middle of each planar portion (22) thereof, and the planar portion (22b) around the optical fibre fixing portion (26b) of said holding groove lies in a plane receded toward the curved peripheral surface of the hollow member (21) with respect to the planar portion (22a) around the optical fibre lead-in portion (26a) of said holding groove.

5. The optical fibre holder according to any preceding claim, wherein said holding case comprises;
an optical fibre guide (31) formed of a cylindrical member having at the centre thereof an insertion hole (32) through which the optical fibre is fittingly inserted in use and having such a shape that a rear-end portion (31b) thereof is smaller in diameter than a front-end portion (31a) thereof; and
a sleeve (41) one-end portion (41a) of which has such an inner diameter that said pair of hollow members (21) can be inserted therein and the rear end of said optical fibre guide (31) can be press-inserted therein, and the other-end portion (41b) of which has such an inner diameter that the peripheries (23) of said pair of hollow members (21) can be pressed against its inner wall when the hollow members (21) are forced thereinto with the rear end portion (31b) of said optical fibre guide (31).
